# EUROPEAN PATENT SPECIFICATION

(11) **EP 4 542 309 B1**
(45) Date of publication and mention of the grant of the patent: **22.07.2026**
(21) Application number: 24215403.7
(22) Date of filing: 27.01.2022
(51) Int. Cl.: H04N 9/31, G02B 27/46, G02B 26/08, G02B 27/42, G06T 3/4069

(54) **PROJECTION SYSTEM AND METHOD WITH PIXEL SHIFTING**
PROJEKTIONSSYSTEM UND VERFAHREN MIT BILDPUNKTVERSCHIEBUNG
SYSTÈME ET PROCÉDÉ DE PROJECTION AVEC DÉCALAGE DE PIXEL

(30) Priority: 29.01.2021 EP 21154272; 29.01.2021 US 202163143149 P
(43) Date of publication of application: 23.04.2025
(62) Divisional of application: 22703821.3
(73) Proprietor: Dolby Laboratories Licensing Corporation, San Francisco, CA 94103 (US)
(72) Inventor: PERTIERRA, Juan P., 94103 San Francisco (US); RICHARDS, Martin J., 98335 Gig Harbor (US)
(74) Representative: Dolby International AB Patent Group Europe

(56) References cited:
- WO-A1-2019/195182
- US-A1- 2006 082 562
- US-A1- 2008 088 800

## Description

### CROSS-REFERENCE TO RELATED APPLICATIONS

This application is a European divisional application of European Patent Application No. 22703821.3 (reference: D20005EP01), filed on 27 January 2022.

### BACKGROUND

### 1. Field of the Disclosure

This application relates generally to projection systems and projection methods.

### 2. Description of Related Art

Digital projection systems typically utilize a light source and an optical system to project an image onto a surface or screen. The optical system may include components such as mirrors, lenses, waveguides, optical fibers, beam splitters, diffusers, spatial light modulators (SLMs), and the like. The contrast of a projector indicates the brightest output of the projector relative to the darkest output of the projector. Contrast ratio is a quantifiable measure of contrast, defined as a ratio of the luminance of the projector's brightest output to the luminance of the projector's darkest output. This definition of contrast ratio is also referred to as "static," "native," or "sequential" contrast ratio.

Some projection systems are based on SLMs that implement a spatial amplitude modulation, such as a digital micromirror device (DMD) chip. A DMD may utilize a two-dimensional array of mirrors which can be controlled to create an image. If one desires to project an image with a higher resolution than that of the DMD *(e.g.,* an image having a greater number of pixels than the number of mirrors in the DMD), pixel-shifting techniques may be used. In one comparative example of a pixel-shifting technique, sometimes called "wobulation," the system may be controlled to effectively shift the modulator by fractional pixels in a set pattern to create the appearance of displaying additional pixels. US 2006/0082562 A1 describes a display system including a mechanism to provide for simultaneous pixelated color with a spatial light modulator. A projection of the simultaneous pixelated color creates a color field display on a viewing surface. The display and surface are moved relatively to provide color and / or resolution increasing wobulation.

### BRIEF SUMMARY OF THE DISCLOSURE

The invention is set out in the appended claims.

Various aspects of the present disclosure relate to devices, systems, and methods for projection display, especially for use with a high-contrast projection architecture.

In one exemplary aspect of the present disclosure, there is provided a projection system comprising a light source configured to emit a light; a spatial light modulator configured to receive the light and generate a modulated light; a lens configured to spatially Fourier transform the modulated light; a filter including an aperture, the filter configured to transmit at least one diffraction order of the modulated light as Fourier-transformed by the lens and to block a remaining portion of the modulated light; and a controller configured to: for each of a plurality of subperiods, cause the projection system to project an image through the filter, and between each of the plurality of subperiods, shift the image by a partial pixel distance.

In another exemplary aspect of the present disclosure, there is provided a projection method comprising by a light source of a projection system, emitting a light; by a spatial light modulator of the projection system, receiving the light and generating a modulated light; by a lens of the projection system, spatially Fourier transforming the modulated light; by a filter of the projection system including an aperture, transmitting at least one diffraction order of the modulated light as Fourier-transformed by the lens and blocking a remaining portion of the modulated light; by a controller of the projection system, for each of a plurality of subperiods, causing the projection system to project an image through the aperture; and by the controller, between each of the plurality of subperiods, shifting the image by a partial pixel distance.

In this manner, various aspects of the present disclosure provide for the display of images having a high dynamic range, high contrast ratio, and high resolution, and effect improvements in at least the technical fields of image projection, holography, signal processing, and the like.

### DESCRIPTION OF THE DRAWINGS

These and other more detailed and specific features of various embodiments are more fully disclosed in the following description, reference being had to the accompanying drawings, in which:
FIGS. 1A-1B illustrate views of an exemplary spatial light modulator according to various aspects of the present disclosure;
FIG. 2 illustrates an exemplary pixel-shift operation according to various aspects of the present disclosure;
FIG. 3 illustrates a block diagram of an exemplary projection system according to various aspects of the present disclosure;
FIG. 4 illustrates an exemplary projection optical system according to various aspects of the present disclosure;
FIG. 5 illustrates an exemplary illumination diffraction pattern according to a comparative example;
FIG. 6 illustrates an exemplary illumination diffraction pattern according to various aspects of the present disclosure;
FIGS. 7A-7C illustrate exemplary pixel shaping effects according to various aspects of the present disclosure;
FIG. 8 illustrates an exemplary process flow of an exemplary pixel-shift method according to various aspects of the present disclosure;
FIGS. 9A-9C illustrate exemplary projected images according to various aspects of the present disclosure; and
FIGS. 10A-10C illustrate exemplary projected images according to various aspects of the present disclosure.

### DETAILED DESCRIPTION

This disclosure and aspects thereof can be embodied in various forms, including hardware, devices, or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing summary is intended solely to give a general idea of various aspects of the present disclosure, and does not limit the scope of the disclosure in any way.

In the following description, numerous details are set forth, such as optical device configurations, timings, operations, and the like, in order to provide an understanding of one or more aspects of the present disclosure. It will be readily apparent to one skilled in the art that these specific details are merely exemplary and not intended to limit the scope of this application.

Moreover, while the present disclosure focuses mainly on examples in which the various circuits are used in digital projection systems, it will be understood that this is merely one example of an implementation. It will further be understood that the disclosed systems and methods can be used in any device in which there is a need to project light; for example, cinema, consumer and other commercial projection systems, heads-up displays, virtual reality displays, and the like.

### Pixel Shifting

The optics of an SLM-based projection system may be broadly categorized into two parts: the optics located on the illumination side (*i.e.,* optically upstream of the SLM) and the optics located on the projection side (*i.e.,* optically downstream of the SLM). The SLM itself includes a plurality of modulating elements arranged in, for example, a two-dimensional array. Individual modulating elements receive light from the illumination optics and convey light to the projection optics. In some examples, the SLM may be implemented as a DMD; this will be discussed in more detail below. Generally, however, a DMD includes a two-dimensional array of reflective elements (micromirrors or simply "mirrors") which selectively reflect light towards the projection optics or discard light based on the position of the individual reflective elements.

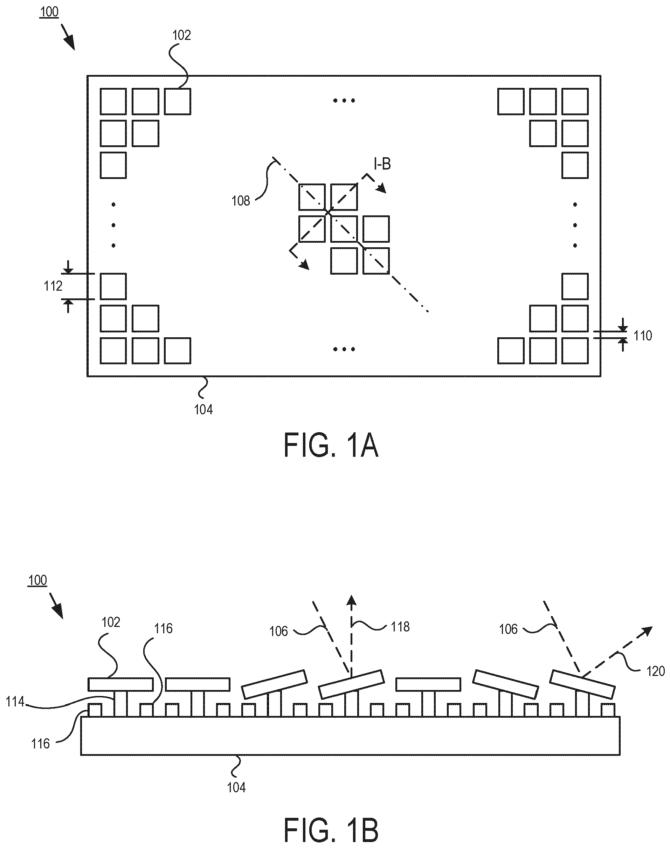

FIGS. 1A-1B illustrate various views of an exemplary DMD 100 according to various aspects of the present disclosure. In particular, FIG. 1A illustrates a plan view of the DMD 100 and FIG. 1B illustrates a partial cross-sectional view of the DMD 100 taken along line I-B illustrated in FIG. 1A. The DMD 100 includes a plurality of square micromirrors 202 arranged in a two-dimensional rectangular array on a substrate 104. In some examples, the DMD 100 may be a digital light processor (DLP) device. Each micromirror 102 may correspond to one pixel of the eventual projection image, and may be configured to tilt about a rotation axis 108, shown for one particular subset of the micromirrors 102, by electrostatic or other actuation. The individual micromirrors 102 have a width 112 and are arranged with gaps of width 110 therebetween. The micromirrors 102 may be formed of or coated with any highly reflective material, such as aluminum or silver, to thereby specularly reflect light. The gaps between the micromirrors 102 may be absorptive, such that input light which enters a gap is absorbed by the substrate 104.

While FIG. 1A expressly shows only some representative micromirrors 102, in practice the DMD 100 may include many more individual micromirrors. The resolution of the DMD 100 refers to the number of micromirrors in the horizontal and vertical directions. In some examples, the resolution may be 2K (2048×1080), 4K (4096×2160), 1080p (1920×1080), consumer 4K (3840×2160), and the like. Moreover, in some examples the micromirrors 102 may be rectangular and arranged in the rectangular array; hexagonal and arranged in a hexagonal array, and the like. Moreover, while FIG. 1A illustrates the rotation axis 108 extending in an oblique direction, in some implementations the rotation axis 108 may extend vertically or horizontally.

As can be seen in FIG. 1B, each micromirror 102 may be connected to the substrate 104 by a yoke 114, which is rotatably connected to the micromirror 102. The substrate 104 includes a plurality of electrodes 116. While only two electrodes 116 per micromirror 102 are visible in the cross-sectional view of FIG. 1B, each micromirror 102 may in practice include additional electrodes. While not particularly illustrated in FIG. 1B, the DMD 100 may further include spacer layers, support layers, hinge components to control the height or orientation of the micromirror 102, and the like. The substrate 204 may include electronic circuitry associated with the DMD 100, such as CMOS transistors, memory elements, and the like.

Depending on the particular operation and control of the electrodes 116, the individual micromirrors 102 may be switched between an "on" position, an "off" position, and an unactuated or neutral position. If a micromirror 102 is in the on position, it is actuated to an angle of, *e.g.,* -12° (that is, rotated counterclockwise by 12° relative to the neutral position) to specularly reflect input light 106 into on-state light 118. If a micromirror 102 is in the off position, it is actuated to an angle of, *e.g.,* +12° (that is, rotated clockwise by 12° relative to the neutral position) to specularly reflect the input light 106 into off-state light 120. The off-state light 120 may be directed toward a light dump that absorbs the off-state light 120. In some instances, a micromirror 102 may be unactuated and lie parallel to the substrate 104. The particular angles illustrated in FIGS. 1A-1B and described here are merely exemplary and not limiting. In some implementations, the on- and off-position angles may be between ±12 and ±13 degrees (inclusive), respectively.

In some implementations, the resolution of the DMD 100 may be lower than the desired resolution of the projected image. For example, one may desire to project an image having a 4K resolution, but DMDs having a 4K resolution may have limited or no commercial availability, prohibitive costs, and so on. In such implementations, it may be possible to control the relatively-low-resolution DMD 100 to effectively display additional pixels in the projected image. For example, a 2K mirror array may be controlled to display a 4K projected image, or a 1080p mirror array may be controlled to display a consumer 4K projected image. Pixel-shift techniques may be used to effect this control.

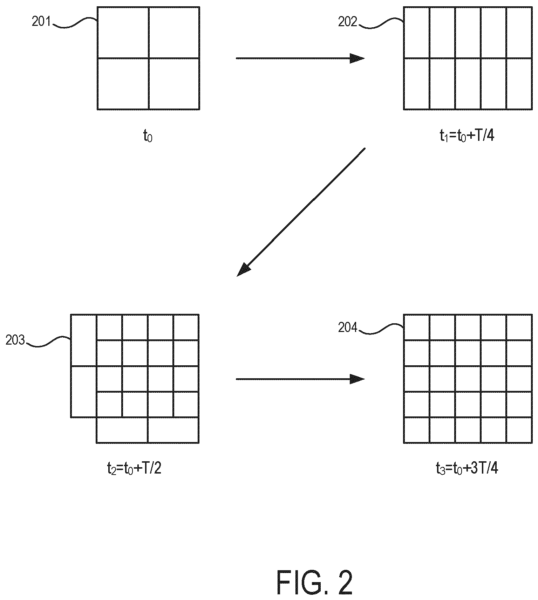

One exemplary pixel-shift technique (wobulation) uses some method (*e.g.,* an optical method) to effectively shift the DMD 100 by fractional pixels in a set pattern to display additional pixels. One example of such a pixel-shift technique is illustrated in FIG. 2. In the pixel-shift technique of FIG. 2, a frame display period T (generally one divided by the projector frame rate) into four sub-periods each having a duration of T/4. At a time t₀ corresponding to the start of the first sub-period and thus the start of the frame display period T, an image is projected onto the screen. In FIG. 2, only a 2×2 subset of the pixels in the first resulting image 201 are shown; however, the first resulting image 201 in practice has a resolution corresponding to the relatively-lower resolution of the DMD 100. At a time t₁ corresponding to the start of the second sub-period, the image is shifted a half-pixel to the right, thus generating the second resulting image 202 on the screen. At a time t₂ corresponding to the start of the third sub-period, the image is shifted a half-pixel down, thus generating the third resulting image 203 on the screen. At a time t₃ corresponding to the start of the fourth sub-period, the image is shifted a half-pixel left, thus generating the fourth resulting image 204 on the screen. At the end of the frame display period T, the image may be shifted a half-pixel up, thus corresponding to the original position to begin display of the next frame. As can be seen from FIG. 2, each shift increases the effective display resolution. The direction of shifting is not limited to the column and row directions of the pixel array (*i.e.,* up, down, left, and right), but may instead be in an oblique direction (*e.g.,* diagonal). Moreover, while FIG. 2 shows a pixel-shifting technique which shifts the image in two dimensions, in certain implementations pixel-shifting may only occur in one dimension in a back-and-forth manner.

This pixel-shift technique, taken alone, may not be sufficient to properly reproduce the desired high-resolution images. For example, the pixels at the lower resolution are four times as large as would be used to display a true image at the higher resolution. Thus, while this technique, taken alone, allows for the display of more pixel data, the overlap prevents a complete reproduction of high-resolution images. In the most extreme example, where the image for display is a full-resolution black/white checkerboard pattern, the above technique, taken alone, will display a flat gray field instead of a checkerboard due to the overlap between every adjacent white and black pixel in the checkerboard. To counteract the effects of the overlap, the design of various physical components of the projector system itself may be modified.

### Projector Systems

Some projection systems are based on SLMs that implement a spatial amplitude modulation. In such a system, the light source may provide a light field that embodies the brightest level that can be reproduced on the image, and light is attenuated or discarded in order to create the desired scene levels. Some high contrast examples of projection systems based on this architecture use a semi-collimated illumination system and Fourier stop in the projection optics to improve contrast. An example of a projector or other display system including or relating to a Fourier plane and aperture have been described in commonly-owned patents and patent applications, including WIPO Pub. No. 2019/195182, titled "Systems and Methods for Digital Laser Projection with Increased Contrast Using Fourier Filter".

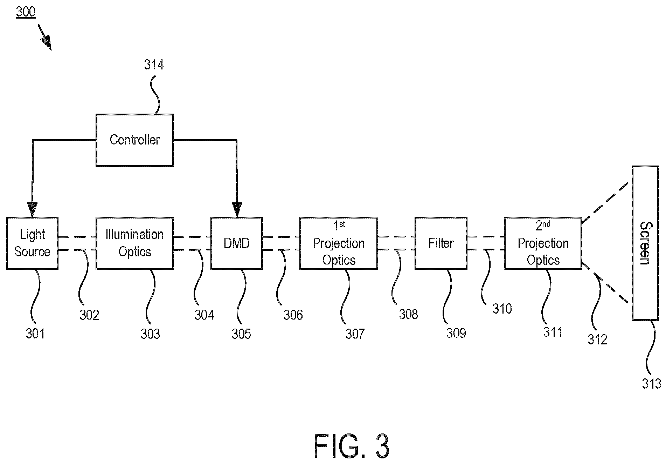

FIG. 3 illustrates an exemplary high contrast projection system 300 according to various aspects of the present disclosure. In particular, FIG. 3 illustrates a projection system 300 which includes a light source 301 configured to emit a first light 302; illumination optics 303 configured to receive the first light 302 and redirect or otherwise modify it, thereby to generate a second light 304; a DMD 305 configured to receive the second light 304 and selectively redirect and/or modulate it as a third light 306; first projection optics 307 configured to receive the third light 306 and redirect or otherwise modify it, thereby to generate a fourth light 308; a filter 309 configured to filter the fourth light 308, thereby to generate a fifth light 310; and second projection optics 311 configured to receive the fifth light 311 and project it as a sixth light 312 onto a screen 313. The DMD 305 may be the same as or similar to the DMD 200 illustrated in FIGS. 2A-2B. The first projection optics 307 may include at least one lens configured to spatially Fourier transform the third light 306 onto a plane (also referred to as the Fourier plane). The filter 309 may be a Fourier aperture (also referred to as a Fourier filter); that is, an aperture located at or near the plane at which a Fourier transform of an object is formed. Micromirrors and gaps of DMD 305 may cooperate to form a two-dimensional grating that diffracts input light. Therefore, modulated light propagating away from DMD 305 may form a plurality of diffraction orders observable as a Fraunhofer diffraction pattern in a far-field region of DMD 305 or at a focal plane of a lens. Each diffraction order corresponds to one light beam propagating away from DMD 305 in a unique respective direction. By design, most of the optical power of modulated light from DMD 305 may be in the zeroth diffraction order.

While FIG. 3 illustrates the first projection optics 307, the filter 309, and the second projection optics 311 as separate entities, in some implementations the filter 309 may be incorporated as part of a larger optical system including the first projection optics 307 and the second projection optics 311. Various elements of the projection system 300 may be operated by or under the control of a controller 314; for example, one or more processors such as a central processing unit (CPU) of the projection system 300. As illustrated in FIG. 3, the light source 301 and the DMD 305 are controlled by the controller 314. In some implementations, the controller 314 may additionally or alternatively control other components of the projection system 300, including but not limited to the illumination optics 303, the first projection optics 307, and/or the second projection optics 311. In one particular example, the controller 314 may control components of the illumination optics 303 to ensure the second light 304 is incident on the DMD 205 at the appropriate location and/or angle.

In 3D or 3D-capable projection implementations, a physical projector may include two projection systems 300 disposed side-by-side, with each individual projection system 300 projecting an image corresponding to one eye of the viewer. Alternatively, a physical projector may utilize one combined projection system 300 to project individual images corresponding to both eyes of the viewer.

In practical implementations, the projection system 300 may include fewer optical components or may include additional optical components such as mirrors, lenses, waveguides, optical fibers, beam splitters, diffusers, and the like. With the exception of the screen 313, the components illustrated in FIG. 3 may be integrated into a housing to provide a projection device. Such a projection device may include additional components such as a memory, input/output ports, communication circuitry, a power supply, and the like.

The light source 301 may be, for example, a laser light source, an LED, and the like. Generally, the light source 301 is any light emitter which emits coherent light. In some aspects of the present disclosure, the light source 301 may comprise multiple individual light emitters, each corresponding to a different wavelength or wavelength band. The light source 301 emits light in response to an image signal provided by the controller 314. The image signal includes image data corresponding to a plurality of frames to be successively displayed. The image signal may originate from an external source in a streaming or cloud-based manner, may originate from an internal memory of the projection system 300 such as a hard disk, may originate from a removable medium that is operatively connected to the projection system 300, or combinations thereof.

Although FIG. 3 illustrates a generally linear optical path, in practice the optical path is generally more complex. For example, in the projection system 300, the second light 304 from the illumination optics 303 is steered to the DMD chip 305 (or chips) at a fixed angle, determined by the steering angle of the DMD mirrors.

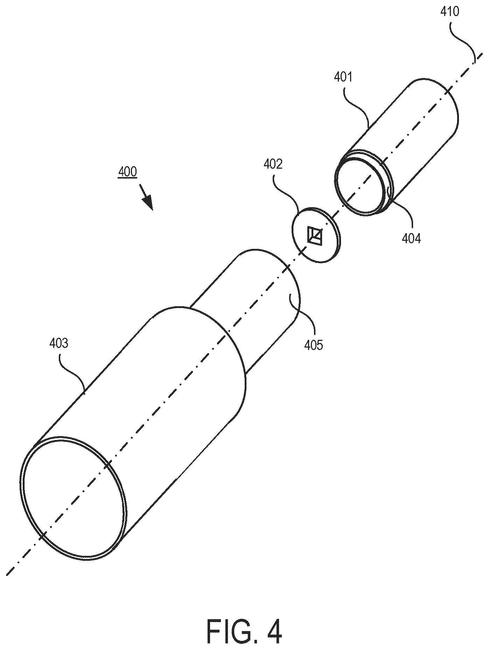

To counteract the effects of overlap caused by pixel-shifting as noted above, the design of the first projection optics 307, the filter 309, and/or the second projection optics 311 may be modified. Preferably, the configuration of the filter 309 is particularly selected to counteract such effects. To illustrate the effects on the image of the filter configuration, FIG. 4 shows an exploded view an exemplary projection lens system 400 according to various aspects of the present disclosure. The projection lens system 400 is one example of the combination of the first projection optics 307, the filter 309, and the second projection optics 311 illustrated in FIG. 3. In some aspects of the present disclosure, the performance of the complete projection lens system 400 meets Digital Cinema Initiatives (DCI) image specifications; for example, the DCI Digital Cinema System Specification (DCSS) Version 1.3 or newer.

The projection lens system 400 includes first projection optics 401 configured to form a Fourier transform of an object at an exit pupil thereof as will be described in more detail below (also referred to as a Fourier part or a Fourier lens assembly), an filter 402, and second projection optics 403 (also referred to as a zoom part or a zoom lens assembly). The first projection optics 401, the filter 402, and the second projection optics 403 may respectively correspond to the first projection optics 307, the filter 309, and the second projection optics 311 illustrated in FIG. 3 As used herein, "Fourier part" or "Fourier lens assembly" refers to an optical system that spatially Fourier transforms modulated light *(e.g.,* light from the DMD 305) by focusing the modulated light onto a Fourier plane. The first projection optics 401 and the filter 402 collectively operate as a Fourier lens with a spatial filter that may also be used as a fixed throw projection lens. The spatial Fourier transform imposed by the first projection optics 401 converts the propagation angle of each diffraction order of the modulated light to a corresponding spatial position on the Fourier plane. The first projection optics 401 thereby enables selection of desired diffraction orders, and rejection of undesired diffraction orders, by spatial filtering at the Fourier plane. The spatial Fourier transform of the modulated light at the Fourier plane is equivalent to a Fraunhofer diffraction pattern of the modulated light. Both the first projection optics 401 and the second projection optics may include a plurality of individual lens elements.

To allow access to the Fourier aperture when setting up the projection system 400 and/or to allow the filter 402 to be interchangeable, the projection lens system 400 may have a modular design. In such instances, the first projection optics 401 may be provided with a first attachment part 404 and the second projection optics 403 may be provided with a second attachment part 405. The first attachment part 404 and the second attachment part 405 may include complementary mating fasteners such as screws, threads, pins, slots, and the like. In other implementations, the housings for the first projection optics 401 and the second projection optics 403 may be integral.

The filter 402 is configured to block a portion of light and to transmit a portion of the light (*e.g.,* to transmit modulated light corresponding to at least one diffraction order) in the projection lens system 200. In some implementations, the diffraction order transmitted by the filter 402 may be a unitary diffraction order (*i.e.,* the entirety of the transmitted order); alternatively, the diffraction order transmitted by the filter 402 may be an aggregate diffraction order (*i.e.,* a part of one order and a complementary part from another order or orders). As illustrated in FIG. 4, the filter 402 has a square opening having sides of, for example, 6 mm in length. FIG. 4 also illustrates an optical axis 410 of the projection lens system 400. When assembled, the first projection optics 401 and the second projection optics are substantially coaxial with one another and with the optical axis 410. In some implementations (for example, depending on the illumination angle), the filter 402 is further substantially coaxial with the optical axis 410.

The projection lens system 400 may include or be associated with one or more non-optical elements, including a thermal dissipation device such as a heat sink (or cooling fins), one or more adhesives (or fasteners), and so on. In some implementations, the filter 402 may block, and thus absorb, approximately 15% or more of incident light and therefore the heat sink or cooling fins may be positioned and configured so as to appropriately dissipate heat from the filter 402. In some implementations, the filter 402 is thermally isolated from other parts of the projection lens system 400.

While FIG. 4 illustrates the opening of the filter 402 as having a square shape, the present disclosure is not so limited. In some implementations, the filter 402 may have a differently-shaped opening, such as a circle, an ellipse, a rounded square, a rectangle, a rounded rectangle, a hexagon, a rounded hexagon, a pincushion, and the like, so long as the shape is dimensioned to cover an appropriate angular passband. The appropriate angular passband may be approximately 190%-210% of a size of a (e.g., zeroth, first, second, etc.) diffraction order in the Fourier plane; for example, approximately 200%. In some implementations, the dimensions and shape of the opening of the filter 402 may be particularly selected such that, when utilized with a pixel-shifting method, the operation of the projector is enhanced. For example, because the filter 402 acts as a Fourier filter, it has an effect on which angular frequency components from the DMD are displayed on a screen. Thus, modifications to the opening of the filter 402 result in changes to the size and/or shape of the pixels displayed on the screen. In one example, the size of the pixels can effectively be reduced such that they are smaller on the screen than the projected size of the physical mirrors of the DMD. When combined with a pixel-shifting technique, this may create higher resolution images. To achieve this, the light source of the projection system (*e.g*., the light source 301 illustrated in FIG. 3) is selected to have sufficiently high coherence and low etendue to employ Fourier filtering effectively. Thus, the light sources may be laser light sources.

### Fourier-Enhanced Pixel Shifting

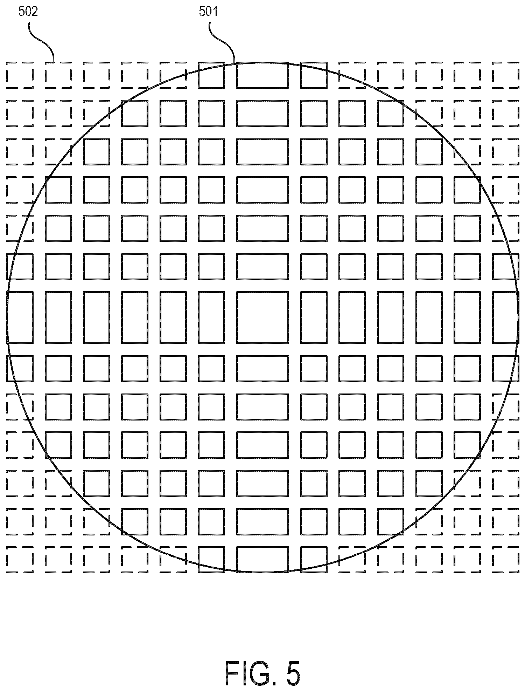

The effects of the dimensions and shape of the filter aperture are illustrated in FIGS. 5-9C. FIG. 5 illustrates the effects of pixel-shifting with no filter (or with a filter having a large aperture), assuming adequate illumination by the light source. In FIG. 5, the aperture 501 is superimposed on a plurality of diffraction orders 502. The aperture 501 may correspond to the projection lens aperture (*e.g.,* of a projection lens in the first projection optics 307 illustrated in FIG. 3) or, in the case where a Fourier filter having a large aperture is used, to the opening of the Fourier filter (*e.g.,* of the filter 309 and/or the filter 402 illustrated in FIGS. 3-4). Diffraction orders 502 which are all or mostly blocked are illustrated using dashed lines, and diffraction orders 502 which are all or mostly transmitted are illustrated using solid lines.

FIG. 5 corresponds to a particular example in which the light emitted from the light source has a wavelength of 545 nm, the illumination angle of the light incident on the DMD (*e.g.,* the angle of the input light 106 illustrated in FIG. 1B, measured relative to the normal of a micromirror in the unactuated or neutral position) is 24°, the on-position angle of the mirrors of the DMD (*e.g.,* the angle of the surface of the micromirror 102 in the on state illustrated in FIG. 1B, measured relative to the plane of the substrate 104) is 12°, the off-position angle of the mirrors of the DMD (*e.g.,* the angle of the surface of the micromirror 102 in the off state illustrated in FIG. 1B, measured relative to the plane of the substrate 104) is -12°, the width of the mirrors of the DMD (*e.g.,* the width 112 illustrated in FIG. 1A) is 10.80 µm, and the gap between the mirrors of the DMD (*e.g.,* the width 114 illustrated in FIG. 1A) is 0.75 µm.

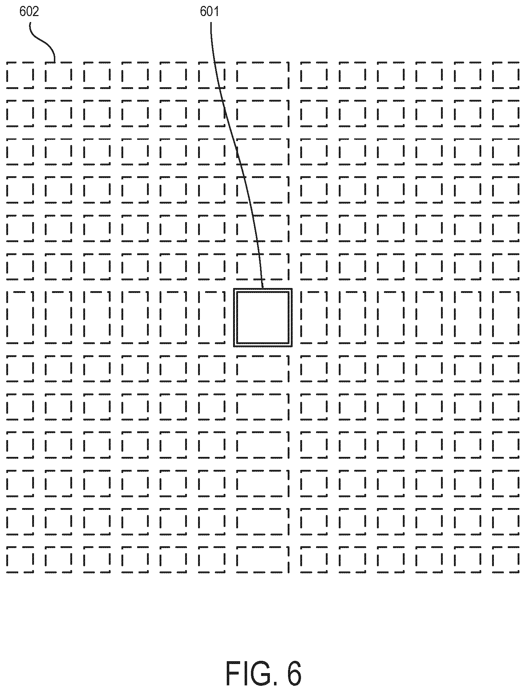

FIG. 6 illustrates the effects of pixel-shifting with a particularly-sized filter having a square aperture of a size (e.g., being of a diameter or height and/or width, or area) that is 200% of a size of a diffraction order (e.g., of a respective diameter or height and/or width, or area, of a zeroth or higher diffraction order), assuming adequate illumination by the light source. In FIG. 6, the aperture 601 is superimposed on a plurality of diffraction orders 602. The aperture 601 may correspond to the opening of the Fourier filter (*e.g.,* of the filter 309 and/or the filter 402 illustrated in FIGS. 3-4). Diffraction orders 602 which are blocked are illustrated using dashed lines, and the diffraction order 602 which is transmitted is illustrated using solid lines. As shown in FIG. 6, aperture 601 passes light from a diffraction order 602 that is illustrated using solid lines and that corresponds to a zeroth diffraction order.

FIG. 6 corresponds to the same projection system parameters as FIG. 5; that is, the particular example in which the light emitted from the light source has a wavelength of 545 nm, the illumination angle of the light incident on the DMD (*e.g.,* the angle of the input light 106 illustrated in FIG. 1B, measured relative to the normal of a micromirror in the unactuated or neutral position) is 24°, the on-position angle of the mirrors of the DMD (*e.g.,* the angle of the surface of the micromirror 102 in the on state illustrated in FIG. 1B, measured relative to the plane of the substrate 104) is 12°, the off-position angle of the mirrors of the DMD (*e.g.,* the angle of the surface of the micromirror 102 in the off state illustrated in FIG. 1B, measured relative to the plane of the substrate 104) is -12°, the width of the mirrors of the DMD (*e.g.,* the width 112 illustrated in FIG. 1A) is 10.80 µm, and the gap between the mirrors of the DMD (*e.g.,* the width 114 illustrated in FIG. 1A) is 0.75 µm.

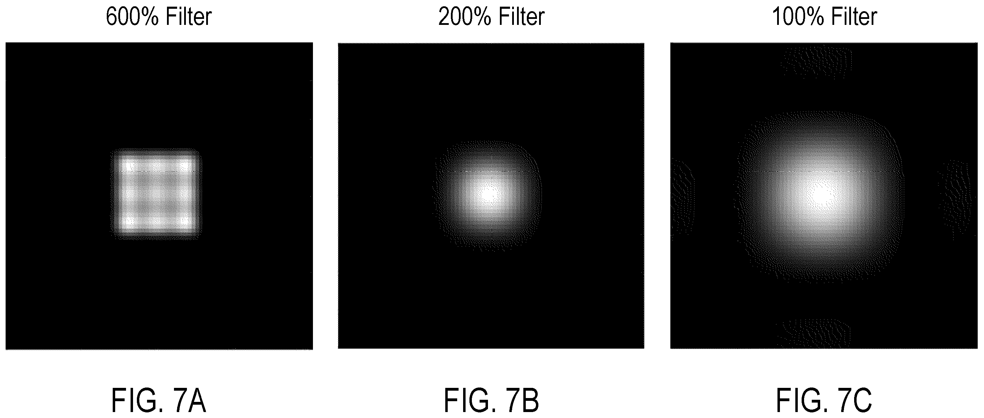

In FIG. 5, because many diffraction orders, amounting to a large portion of the DMD angular Fourier spectrum, are captured by the lens, many of the high-spatial-frequency details (*e.g.,* mirror edges) are reproduced on the screen, resulting in square pixels corresponding to the size of the mirrors in the physical device. In FIG. 6, the filter corresponds to capturing the central lobe of the mirror diffraction (*i.e.,* a sinc function) cloud. Because the pass-band of the filter in FIG. 6 is reduced compared to the system in FIG. 5, high angular frequencies will not be transmitted. As the pass-band of the filter becomes smaller, sharp details such as the edges of the mirrors will be lost and, at one particular point shown in FIG. 6, only the image content frequencies will be allowed to pass. If the size of the opening of the filter is further reduced, the filter will begin to low-pass image content, which may result in image blurring on the screen. The effects of the particular size of the opening is illustrated in FIGS. 7A-7C.

Each of FIGS. 7A-7C illustrate a single pixel projected by a projection system having the same characteristics and components, except that in each illustration the size of the filter aperture is different. Moreover, each of FIGS. 7A-7C are presented on the same scale. In FIG. 7A, the filter has a square aperture that is 600% of a diffraction order in size; in FIG. 7B, the filter has a square aperture that is 200% of a diffraction order in size; and in FIG. 7C, the filter has a square aperture that is 100% of a diffraction order in size. Compared to FIG. 7A, FIG. 7B does not exhibit unwanted high-spatial-frequency details. Compared to FIG. 7C, FIG. 7B is brighter in the middle and dimmer towards the corner of the mirror. FIG. 7B illustrates the point at which the image data and nothing else passes through the filter. When combined with a pixel-shift technique, the smaller pixel of FIG. 7B has less overlap. Thus, in a projection system which includes a Fourier filter and utilizes a pixel-shift technique, the filter preferably has a square filter that is approximately 190%-210% of a diffraction order in size, and most preferably has a square filter that is approximately 200% of a diffraction order in size.

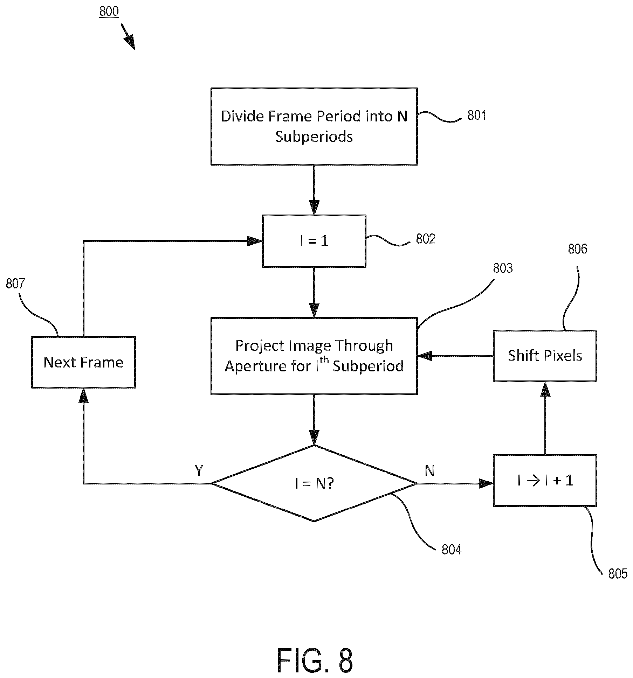

One particular implementation of a pixel-shift technique in a projection system having a Fourier filter, such as the projection system 300 illustrated in FIG. 3, is illustrated in FIG. 8. The method 800 of FIG. 8 may be performed by the controller 314 of FIG. 3, and may be implemented using hardware, software, firmware, or combinations thereof. In some examples, the method 800 is implemented as instructions stored in a non-transitory computer-readable medium, such as a hard disk or other storage medium contained in or associated with the projection system 300.

In the method 800, a series of images are displayed using image data which includes a series of frames. The image data is divided into a plurality of frame periods each corresponding to the duration T of a frame; for example, a 60 Hz display has a frame period T of (1/60) sec. At operation 801, the frame period is divided into N subperiods, with N being an integer larger than 1. Preferably, N is four to implement a pixel-shifting pattern similar to that illustrated in FIG. 2; however, in other implementations N may be six or another number other than four. At operation 802, a counter I is initialized to 1. Subsequently, at operation 803, an image is projected through the filter aperture for the I^{th} subperiod. Operation 803 may include sub-operations, such as causing a light source of the projection system to emit light, controlling the spatial light modulator (*e.g*., the DMD 305 of FIG. 3) to modulate the light and form the image, and so on. This image is maintained for a duration of T / N. In the example of a 60 Hz display using four subperiods per frame, this subperiod duration is (1/240) sec.

At the end of the subperiod at operation 804, the counter I is compared to N to determine if the subperiod is the last subperiod of the frame. If the counter I does not equal N, at operation 805 the counter I is incremented by 1 and at operation 806 the pixels are shifted. In the example where four subperiods are provided per frame and the pixel-shifting follows a square pattern as in FIG. 2, this corresponds to a half-pixel shift. Alternatively, four subperiods may be provided per frame and the pixel-shifting may follow a diamond or rectangle pattern; six subperiods may be provided per frame and the pixel-shifting may follow a rectangle or hexagon pattern; three subperiods may be provided per frame and the pixel-shifting may follow a triangle pattern; two subperiods may be provided per frame and the pixel-shifting may follow a linear (back-and-forth) pattern; and so on. In some implementations, the number of subperiods may be on the order of tens (or greater) and the pixel-shifting may approximate a circular pattern or a complex shape. Thereafter, operation 803 is repeated for the next subperiod until the time when the counter I is equal to N. At this point, at operation 807 the frame is incremented and the method 800 returns to operation 807. Operations 802 through 807 are repeated for the duration of image display, and may continue until the endpoint of the media content has been reached, an operation issues a pause or stop instruction, and so on.

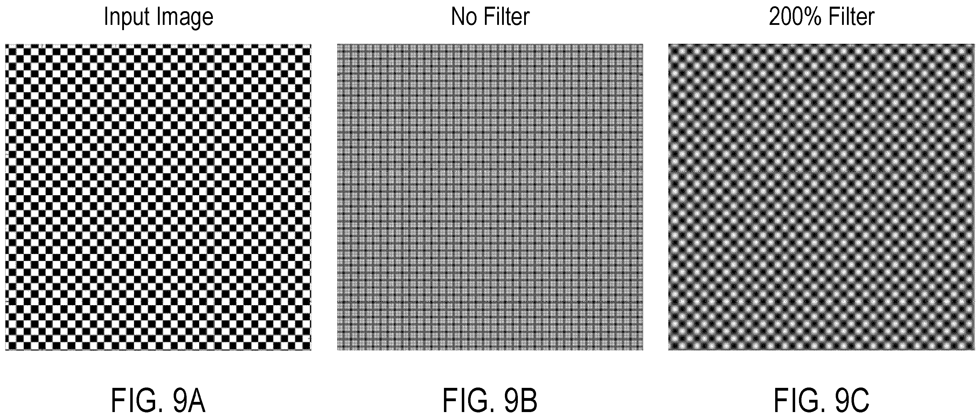

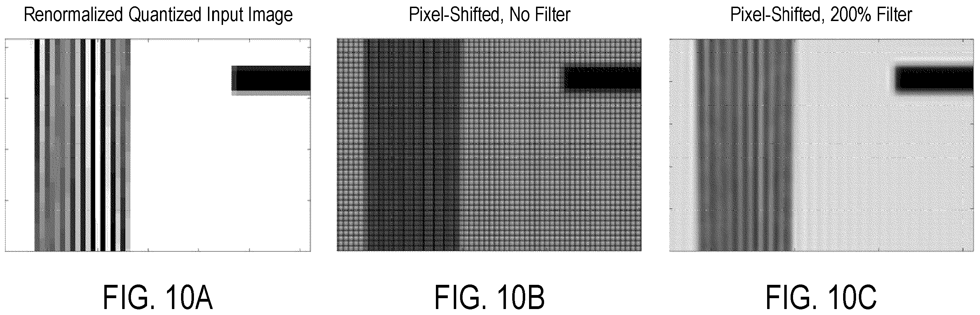

When a pixel-shifting technique is combined with the filter, the effects of the particular size of the opening are illustrated in FIGS. 9A-10C. FIGS. 9A-9C illustrate the results of a first image test using a checkerboard pattern, and FIGS. 10A-10C illustrate the results of a second image test using a resolution chart.

FIG. 9A shows the input image for the first image test, which is a full-resolution 4K checkerboard pattern shown in close-up. FIG. 9B shows the result (*i.e.,* the output image) for a projection system which implements a four-subperiod pixel-shifting technique (as shown in FIG. 2) but which does not include a Fourier aperture, such as the filter 309 of FIG. 2 or the filter 402 of FIG. 4. FIG. 9C shows the result for a projection system which implements a four-subperiod pixel-shifting technique and which includes a Fourier aperture having an opening that is 200% of the diffraction order in size. In FIG. 9B, the black squares of the checkerboard are indistinguishable from the white squares, as all squares appear to be substantially the same grayish color. In FIG. 9C, however, the squares of the checkerboard are distinguishable from one another. While the modulation amplitude is not as high as it would be if the projection system used a native full-resolution modulator, the combination of pixel-shifting and the particularly-sized aperture allows for the reproduction of high-resolution details using a lower-resolution modulator. As can be seen by comparing FIGS. 9B and 9C, the pixel-shifting technique alone, without the further implementation of the aperture, cannot reproduce such details.

FIG. 10A shows the input image for the second image test, which is a renormalized quantized resolution chart shown in close-up. FIG. 10B shows the result for a projection system which implements a four-subperiod pixel-shifting technique and which includes a Fourier aperture having an opening that is 800% of the diffraction order in size. FIG. 10C shows the result for a projection system which implements a four-subperiod pixel-shifting technique and which includes a Fourier aperture having an opening that is 200% of the diffraction order in size. In practice, the large opening used to project the image in FIG. 10B is analogous to having no filter at all, as can be seen by comparing the artifacts in FIG. 10B to similar ones in FIG. 9B. As such, the lines in the resolution pattern are not resolved in FIG. 10B. In FIG. 10C, however, the lines are resolved even in the close-up view.

### Effects

By comparing FIGS. 9C and 10C with FIGS. 9B and 10B and in view of FIGS. 7B and 7C, it can be seen that the effects of pixel-shifting and the particularly-sized aperture opening (and in particular, the ability to properly render a high-resolution image using a lower-resolution modulator) are unexpectedly greater than merely the sum of pixel-shifting alone and a Fourier aperture alone.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in less than all features of a single disclosed embodiment.

## Claims

1. A projection system, comprising:
a light source (301) configured to emit a light;
a spatial light modulator (305) configured to receive the light and generate a modulated light;
a lens (307) configured to spatially Fourier transform the modulated light;
a filter (309) including an aperture, the filter configured to transmit at least one diffraction order of the modulated light as Fourier-transformed by the lens and to block a remaining portion of the modulated light; and
a controller (314) configured to:
for each of a plurality of subperiods, cause the projection system to project an image through the filter, and
between each of the plurality of subperiods, shift the image by a partial pixel distance, wherein the light source includes at least one laser and wherein the filter is thermally isolated from other parts of the projection system.

2. The projection system according to claim 1, wherein a size of the aperture is between 190% and 210% of a size of a zeroth diffraction order of the modulated light and wherein the filter is configured to transmit at least the zeroth diffraction order of the modulated light.

3. The projection system according to claim 2, wherein the size of the aperture is 200% of the size of the zeroth diffraction order of the modulated light.

4. The projection system according to any of claims 1 to 3, wherein a shape of the aperture is square, circular, or elliptical.

5. The projection system according to any of claims 1 to 4, wherein the plurality of subperiods is four subperiods.

6. The projection system according to any of claims 1 to 5, wherein the partial pixel distance is equal to a half-pixel distance.

7. The projection system according to any of claims 1 to 6, wherein the controller is configured to:
between a first subperiod and a second subperiod, shift the image by a half-pixel distance in a first direction,
between the second subperiod and a third subperiod, shift the image by a half-pixel distance in a second direction perpendicular to the first direction,
between the third subperiod and a fourth subperiod, shift the image by a half-pixel distance in a third direction perpendicular to the second direction and opposite to the first direction, and
after the fourth subperiod, shift the image by a half-pixel distance in a fourth direction perpendicular to the third direction and opposite to the second direction.

8. The projection system according to any of claims 1 to 7, wherein the controller is configured to repeatedly cause the projection system to project the image and shift the image for a plurality of image frames.

9. The projection system according to any of claims 1 to 8, wherein the spatial light modulator is a digital micromirror device.

10. A projection method, comprising:
by a light source of a projection system, emitting a light;
by a spatial light modulator of the projection system, receiving the light and generating a modulated light;
by a lens of the projection system, spatially Fourier transforming the modulated light;
by a filter of the projection system including an aperture, transmitting at least one diffraction order of the modulated light as Fourier-transformed by the lens and blocking a remaining portion of the modulated light;
by a controller of the projection system, for each of a plurality of subperiods, causing the projection system to project an image through the aperture; and
by the controller, between each of the plurality of subperiods, shifting the image by a partial pixel distance, wherein the light source includes at least one laser and wherein the filter is thermally isolated from other parts of the projection system.

11. The projection method according to claim 10, wherein a size of the aperture is between 190% and 210% of a size of a zeroth diffraction order of the modulated light and wherein the filter transmits at least the zeroth diffraction order of the modulated light.

12. The projection method according to claim 11, wherein the size of the aperture is 200% of the size of the zeroth diffraction order of the modulated light.

13. The projection method according to any of claims 10 to 12, wherein a shape of the aperture is square, circular, or elliptical.

14. The projection method according to any of claims 10 to 13, wherein the plurality of subperiods is four subperiods.

15. The projection method according to any of claims 10 to 14, wherein the partial pixel distance is equal to a half-pixel distance.

16. The projection method according to any of claims 10 to 15, wherein the operation of shifting pixels includes:
between a first subperiod and a second subperiod, shifting the image by a half-pixel distance in a first direction,
between the second subperiod and a third subperiod, shifting the image by a half-pixel distance in a second direction perpendicular to the first direction,
between the third subperiod and a fourth subperiod, shifting the image by a half-pixel distance in a third direction perpendicular to the second direction and opposite to the first direction, and
after the fourth subperiod, shifting the image by a half-pixel distance in a fourth direction perpendicular to the third direction and opposite to the second direction.

17. The projection method according to any of claims 10 to 16, comprising:
by the controller, repeating the operations of projecting the image and shifting the image for a plurality of image frames.

18. A non-transitory computer-readable medium storing instructions that, when executed by an electronic processor of a projection device, cause the projection device to perform operations comprising the method of any of claims 10 to 17.

## Patentansprüche

1. Projektionssystem, umfassend:
eine Lichtquelle (301), die konfiguriert ist, um Licht auszusenden;
einen räumlichen Lichtmodulator (305), der konfiguriert ist, um das Licht zu empfangen und ein moduliertes Licht zu erzeugen;
eine Linse (307), die konfiguriert ist, um das modulierte Licht einer räumlichen Fourier-Transformation zu unterziehen;
ein Filter (309), das eine Blende beinhaltet, wobei das Filter konfiguriert ist, um mindestens eine Beugungsordnung des durch die Linse einer Fourier-Transformation unterzogenen modulierten Lichts zu übertragen und einen verbleibenden Abschnitt des modulierten Lichts zu blockieren; und
eine Steuereinheit (314), die konfiguriert ist, um:
für jeden einer Vielzahl von Teilzeiträumen das Projektionssystem zu veranlassen, ein Bild durch das Filter zu projizieren, und
zwischen jedem der Vielzahl von Teilzeiträumen das Bild um eine Teilpixeldistanz zu verschieben, wobei die Lichtquelle mindestens einen Laser beinhaltet und wobei das Filter von anderen Teilen des Projektionssystems wärmeisoliert ist.

2. Projektionssystem nach Anspruch 1, wobei eine Größe der Blende 190% bis 210% einer Größe einer nullten Beugungsordnung des modulierten Lichts beträgt und wobei das Filter konfiguriert ist, um mindestens die nullte Beugungsordnung des modulierten Lichts zu übertragen.

3. Projektionssystem nach Anspruch 2, wobei die Größe der Blende 200% der Größe der nullten Beugungsordnung des modulierten Lichts beträgt.

4. Projektionssystem nach einem der Ansprüche 1 bis 3, wobei eine Form der Blende quadratisch, kreisförmig oder elliptisch ist.

5. Projektionssystem nach einem der Ansprüche 1 bis 4, wobei die Vielzahl von Teilzeiträumen vier Teilzeiträume beträgt.

6. Projektionssystem nach einem der Ansprüche 1 bis 5, wobei die Teilpixeldistanz gleich einer Halbpixeldistanz ist.

7. Projektionssystem nach einem der Ansprüche 1 bis 6, wobei die Steuereinheit konfiguriert ist, um:
zwischen einem ersten Teilzeitraum und einem zweiten Teilzeitraum das Bild um eine Halbpixeldistanz in eine erste Richtung zu verschieben,
zwischen dem zweiten Teilzeitraum und einem dritten Teilzeitraum das Bild um eine Halbpixeldistanz in eine zweite Richtung senkrecht zu der ersten Richtung zu verschieben,
zwischen dem dritten Teilzeitraum und einem vierten Teilzeitraum das Bild um eine Halbpixeldistanz in eine dritte Richtung senkrecht zu der zweiten Richtung und der ersten Richtung entgegengesetzt zu verschieben und
nach dem vierten Teilzeitraum das Bild um eine Halbpixeldistanz in eine vierte Richtung senkrecht zu der dritten Richtung und der zweiten Richtung entgegengesetzt zu verschieben.

8. Projektionssystem nach einem der Ansprüche 1 bis 7, wobei die Steuereinheit konfiguriert ist, um das Projektionssystem wiederholt dazu zu veranlassen, das Bild zu projizieren und das Bild für eine Vielzahl von Einzelbildern zu verschieben.

9. Projektionssystem nach einem der Ansprüche 1 bis 8, wobei der räumliche Lichtmodulator eine digitale Mikrospiegelvorrichtung ist.

10. Projektionsverfahren, umfassend:
Aussenden von Licht durch eine Lichtquelle eines Projektionssystems;
Empfangen des Lichts und Erzeugen eines modulierten Lichts durch einen räumlichen Lichtmodulator des Projektionssystems;
Unterziehen des modulierten Lichts einer räumlichen Fourier-Transformation durch eine Linse des Projektionssystems;
Übertragen mindestens einer Beugungsordnung des durch die Linse einer Fourier-Transformation unterzogenen modulierten Lichts und Blockieren eines verbleibenden Abschnitts des modulierten Lichts durch einen Filter des Projektionssystems, das eine Blende beinhaltet; und
Veranlassen des Projektionssystems, ein Bild durch die Blende zu projizieren, durch eine Steuereinheit des Projektionsystems für jeden einer Vielzahl von Teilzeiträumen; und
Verschieben des Bildes um eine Teilpixeldistanz durch die Steuereinheit zwischen jedem der Vielzahl von Teilzeiträumen, wobei die Lichtquelle mindestens einen Laser beinhaltet und wobei das Filter von anderen Teilen des Projektionssystems wärmeisoliert ist.

11. Projektionsverfahren nach Anspruch 10, wobei eine Größe der Blende 190% bis 210% einer Größe einer nullten Beugungsordnung des modulierten Lichts beträgt und wobei das Filter mindestens die nullte Beugungsordnung des modulierten Lichts überträgt.

12. Projektionsverfahren nach Anspruch 11, wobei die Größe der Blende 200% der Größe der nullten Beugungsordnung des modulierten Lichts beträgt.

13. Projektionsverfahren nach einem der Ansprüche 10 bis 12, wobei eine Form der Blende quadratisch, kreisförmig oder elliptisch ist.

14. Projektionsverfahren nach einem der Ansprüche 10 bis 13, wobei die Vielzahl von Teilzeiträumen vier Teilzeiträume beträgt.

15. Projektionsverfahren nach einem der Ansprüche 10 bis 14, wobei die Teilpixeldistanz gleich einer Halbpixeldistanz ist.

16. Projektionsverfahren nach einem der Ansprüche 10 bis 15, wobei der Vorgang zum Verschieben von Pixeln beinhaltet:
zwischen einem ersten Teilzeitraum und einem zweiten Teilzeitraum Verschieben des Bildes um eine Halbpixeldistanz in eine erste Richtung,
zwischen dem zweiten Teilzeitraum und einem dritten Teilzeitraum Verschieben des Bildes um eine Halbpixeldistanz in eine zweite Richtung senkrecht zu der ersten Richtung,
zwischen dem dritten Teilzeitraum und einem vierten Teilzeitraum Verschieben des Bildes um eine Halbpixeldistanz in eine dritte Richtung senkrecht zu der zweiten Richtung und entgegengesetzt zu der ersten Richtung,
nach dem vierten Teilzeitraum Verschieben des Bildes um eine Halbpixeldistanz in eine vierte Richtung senkrecht zu der dritten Richtung und entgegengesetzt zu der zweiten Richtung.

17. Projektionsverfahren nach einem der Ansprüche 10 bis 16, umfassend:
durch die Steuereinheit Wiederholen der Vorgänge zum Projizieren des Bildes und Verschieben des Bildes für eine Vielzahl von Einzelbildern.

18. Nichtflüchtiges, computerlesbares Medium, das Anweisungen speichert, die, wenn sie von einem elektronischen Prozessor einer Projektionsvorrichtung ausgeführt werden, die Projektionsvorrichtung veranlassen, Vorgänge auszuführen, die das Verfahren nach einem der Ansprüche 10 bis 17 umfassen.

## Revendications

1. Système de projection, comprenant :
une source de lumière (301) configurée pour émettre une lumière ;
un modulateur spatial de lumière (305) configuré pour recevoir la lumière et générer une lumière modulée ;
une lentille (307) configurée pour effectuer une transformée de Fourier spatiale sur la lumière modulée ;
un filtre (309) incluant un orifice, le filtre étant configuré pour transmettre au moins un ordre de diffraction de la lumière modulée ayant subi une transformée de Fourier par la lentille et pour bloquer une partie restante de la lumière modulée ; et
un dispositif de commande (314) configuré pour :
pour chaque sous-période d'une pluralité de sous-périodes, amener le système de projection à projeter une image à travers le filtre, et
entre chaque sous-période de la pluralité de sous-périodes, décaler l'image d'une distance de pixel partielle, dans lequel la source de lumière inclut au moins un laser et dans lequel le filtre est isolé thermiquement d'autres parties du système de projection.

2. Système de projection selon la revendication 1, dans lequel une taille de l'orifice est entre 190 % et 210 % d'une taille d'un ordre de diffraction nul de la lumière modulée et dans lequel le filtre est configuré pour transmettre au moins l'ordre de diffraction nul de la lumière modulée.

3. Système de projection selon la revendication 2, dans lequel la taille de l'orifice fait 200 % de la taille de l'ordre de diffraction nul de la lumière modulée.

4. Système de projection selon l'une quelconque des revendications 1 à 3, dans lequel une forme de l'orifice est carrée, circulaire ou elliptique.

5. Système de projection selon l'une quelconque des revendications 1 à 4, dans lequel la pluralité de sous-périodes est quatre sous-périodes.

6. Système de projection selon l'une quelconque des revendications 1 à 5, dans lequel la distance de pixel partielle est égale à une distance de demi-pixel

7. Système de projection selon l'une quelconque des revendications 1 à 6, dans lequel le dispositif de commande est configuré pour :
entre une première sous-période et une deuxième sous-période, décaler l'image d'une distance de demi-pixel dans une première direction,
entre la deuxième sous-période et une troisième sous-période, décaler l'image d'une distance de demi-pixel dans une deuxième direction perpendiculaire à la première direction,
entre la troisième sous-période et une quatrième sous-période, décaler l'image d'une distance de demi-pixel dans une troisième direction perpendiculaire à la deuxième direction et opposée à la première direction, et
après la quatrième sous-période, décaler l'une image d'une distance de demi-pixel dans une quatrième direction perpendiculaire à la troisième direction et opposée à la deuxième direction.

8. Système de projection selon l'une quelconque des revendications 1 à 7, dans lequel le dispositif de commande est configuré pour amener de manière répétée le système de projection à projeter l'image et à décaler l'image pour une pluralité de trames d'image.

9. Système de projection selon l'une quelconque des revendications 1 à 8, dans lequel le modulateur spatial de lumière est un dispositif à micro-miroir numérique.

10. Procédé de projection, comprenant :
au moyen d'une source de lumière d'un système de projection, l'émission d'une lumière ;
au moyen d'un modulateur spatial de lumière du système de projection, la réception de la lumière et la génération d'une lumière modulée ;
au moyen d'une lentille du système de projection, la réalisation d'une transformée de Fourier spatiale sur la lumière modulée ;
au moyen d'un filtre du système de projection incluant un orifice, la transmission d'au moins un ordre de diffraction de la lumière modulée ayant subi une transformée de Fourier par la lentille et le blocage d'une partie restante de la lumière modulée ; et
au moyen d'un dispositif de commande du système de projection, pour chaque sous-période d'une pluralité de sous-périodes, le fait d'amener le système de projection à projeter une image à travers l'orifice ; et
au moyen du dispositif de commande, entre chaque sous-période de la pluralité de sous-périodes, le décalage de l'image d'une distance de pixel partielle, dans lequel la source de lumière inclut au moins un laser et dans lequel le filtre est isolé thermiquement d'autres parties du système de projection.

11. Procédé de projection selon la revendication 10, dans lequel une taille de l'orifice est entre 190 % et 210 % d'une taille d'un ordre de diffraction nul de la lumière modulée et dans lequel le filtre transmet au moins l'ordre de diffraction nul de la lumière modulée.

12. Procédé de projection selon la revendication 11, dans lequel la taille de l'orifice est 200 % de la taille de l'ordre de diffraction nul de la lumière modulée.

13. Procédé de projection selon l'une quelconque des revendications 10 à 12, dans lequel une forme de
l'orifice est carrée, circulaire ou elliptique.

14. Procédé de projection selon l'une quelconque des revendications 10 à 13, dans lequel la pluralité de sous-périodes est quatre sous-périodes.

15. Procédé de projection selon l'une quelconque des revendications 10 à 14, dans lequel la distance de pixel partielle est égale à une distance de demi-pixel

16. Procédé de projection selon l'une quelconque des revendications 10 à 15, dans lequel l'opération de décalage de pixels inclut :
entre une première sous-période et une deuxième sous-période, le décalage de l'image d'une distance de demi-pixel dans une première direction,
entre la deuxième sous-période et une troisième sous-période, le décalage de l'image d'une distance de demi-pixel dans une deuxième direction perpendiculaire à la première direction,
entre la troisième sous-période et une quatrième sous-période, le décalage de l'image d'une distance de demi-pixel dans une troisième direction perpendiculaire à la deuxième direction et opposée à la première direction, et
après la quatrième sous-période, le décalage de l'image d'une distance de demi-pixel dans une quatrième direction perpendiculaire à la troisième direction et opposée à la deuxième direction.

17. Procédé selon l'une quelconque des revendications 10 à 16, comprenant :
au moyen du dispositif de commande, la répétition des opérations de projection de l'image et le décalage de l'image pour une pluralité de trames d'image.

18. Support non transitoire lisible par ordinateur stockant des instructions qui, lorsqu'elles sont exécutées par un processeur électronique d'un dispositif de projection, amènent le dispositif de projection à effectuer des opérations comprenant le procédé selon l'une quelconque des revendications 10 à 17.
